# FASCICULE DE BREVET EUROPEEN

(11) **EP 3 366 097 B1**
(45) Date de publication et mention de la délivrance du brevet: **08.06.2022**
(21) Numéro de dépôt: 18157781.8
(22) Date de dépôt: 21.02.2018
(51) Int. Cl.: A01B 63/00, A01B 63/24, A01C 7/20

(54) **SEMOIR COMPRENANT DES MOYENS DE MODIFICATION DE L'ESPACE ENTRE LES RANGS DISPOSÉS ENTRE LES ELEMENTS SEMEURS**
SÄMASCHINE, DIE MITTEL ZUR ABSTANDSÄNDERUNG DER ZWISCHEN DEN SÄELEMENTEN ANGEORDNETEN REIHEN UMFASST
SOWING MACHINE COMPRISING MEANS FOR MODIFYING THE SPACE BETWEEN THE ROWS ARRANGED BETWEEN THE SOWING ELEMENTS

(30) Priorité: 24.02.2017 FR 1751522
(43) Date de publication de la demande: 29.08.2018
(73) Titulaire: Ribouleau Monosem, 79240 Largeasse (FR)
(72) Inventeur: ARNOULD, Alexis, 79240 Vernoux en Gatine (FR); MARCHAND, Benoit, 79140 Combrand (FR)
(74) Mandataire: Kessler, Marc

(56) Documents cités:
- EP-A1- 2 030 495
- DE-A1- 3 927 717
- FR-A1- 2 831 387

## Description

### Objet de l'invention

Le domaine de l'invention est celui de la conception et de la réalisation de semoirs mis en œuvre pour ensemencer des parcelles cultivables.

L'invention concerne plus particulièrement le réglage de la distance inter rang entre les éléments semeurs d'un semoir.

### Etat de la technique

Un semoir comprend classiquement un châssis auquel est solidarisée une pluralité d'éléments semeurs les uns à la suite des autres, chaque élément semeur permettant de déposer des graines dans un sillon.

Le châssis d'un semoir comprend par exemple une flèche destinée à être solidarisée à l'attelage d'un tracteur, et deux poutres latérales reliées à la flèche et sur lesquelles sont disposées les éléments semeurs.

Les semoirs peuvent prendre dans la plupart des cas deux positions :
- une position de travail dans laquelle les poutres latérales s'étendent essentiellement perpendiculairement à la flèche pour procéder à l'ensemencement, et
- une position de transport plus compacte dans laquelle la largeur du semoir est réduite pour qu'il puisse être déplacé sur la voie publique.

On connaît des semoirs munis de poutres latérales télescopiques pouvant être escamotées afin de réduire la largeur du semoir dans la position de transport. Un exemple d'un tel semoir peut être trouvé dans le DE 39 27 717 A1. On connaît également des semoirs munis de poutres latérales de longueur constante articulées à leur extrémité proche de la flèche pour pouvoir être rabattues contre la flèche dans la position de transport.

Les semoirs comprennent des moyens de réglage pour permettre de définir l'espacement entre les éléments semeurs en position de travail et en position de transport, l'espacement des éléments semeurs en position de travail définissant l'espace entre les rangs d'ensemencement.

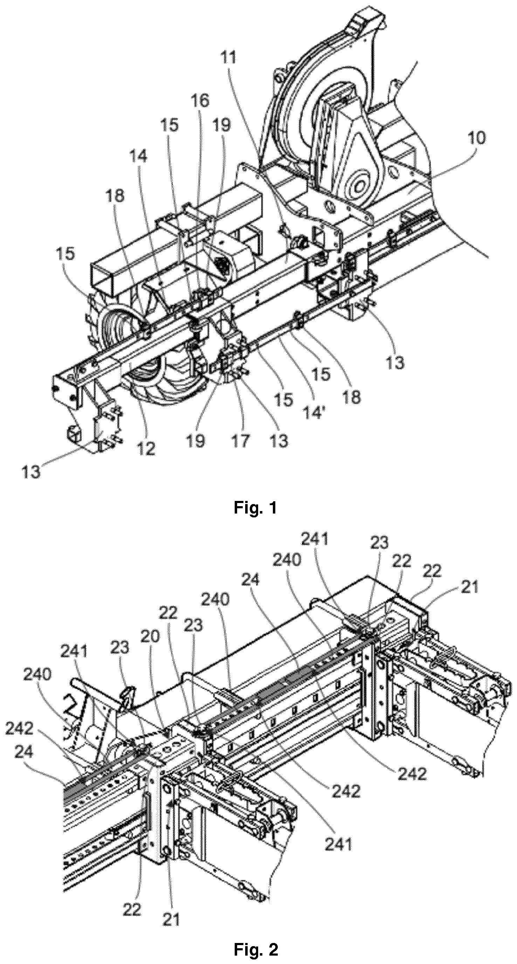

La figure 1 illustre un semoir de l'art antérieur, du type à poutres latérales télescopiques.

Ainsi que cela est représenté sur cette figure 1, le semoir comprend une portion de poutre centrale fixe 10 à l'intérieur de laquelle une première portion de poutre latérale 11 est montée coulissante, à l'intérieur de laquelle une deuxième portion de poutre latérale 12 est montée coulissante.

La figure 1 illustre la moitié d'un semoir, l'autre moitié étant identique et symétrique.

L'extrémité visible de la portion de poutre centrale fixe 10 comprend une platine de fixation 13 d'un élément semeur (non représenté). L'extrémité distale de la première portion de poutre latérale 11, ainsi que l'extrémité distale de la deuxième portion de poutre latérale 12, comprennent chacune une platine de fixation 13 d'un élément semeur (non représenté).

Les portions de poutres 10, 11 et 12 sont liées deux à deux au moyen d'une barre 14, 14'. Ces barres 14 sont traversées par une pluralité de trous 15.

La barre 14 présente une extrémité fixée à l'extrémité distale de la deuxième portion de poutre latérale 12, l'autre extrémité étant montée coulissante d'une fourche 16 solidaire de l'extrémité distale de la première portion de poutre latérale 11.

La barre 14' présente une extrémité fixée à l'extrémité distale de la portion de poutre centrale 10, l'autre extrémité étant montée coulissante d'une fourche 17 solidaire de l'extrémité distale de la première portion de poutre latérale 11.

Chaque barre 14, 14' porte une butée minimale 18 et une butée maximale 19. La position de ces butées sur la barre 14, 14' correspondante peut être modifiée, chacune d'elle étant maintenue en position au moyen d'un axe amovible traversant un des trous 15 et de goupilles.

La position des butées maximales 19 définit la distance maximale entre les éléments semeurs alors que la position des butées minimales 18 détermine la distance minimale entre les éléments semeurs.

Un vérin s'étend à l'intérieur de la partie de poutre centrale 10 et des première et deuxième parties de poutres latérales 11, 12. Une extrémité de celui-ci est fixée à la partie de poutre centrale fixe 10, son autre extrémité étant fixée à l'extrémité distale de la deuxième portion de poutre latérale 12.

Pour déployer le semoir en position de travail, le vérin pousse sur l'extrémité distale de la deuxième portion de poutre latérale 12 qui sort en dehors de la première portion de poutre latérale 11 jusqu'à ce que sa butée maximale 19 vienne en butée contre la fourche 16. Sous l'effet de la poursuite de la course du vérin, la première portion de poutre latérale 11 est entrainée en dehors de la portion de poutre centrale 10, par la barre 14 en prise avec la première position de poutre 11 via la fourche 16 et la butée maxi 19, jusqu'à ce que la butée maximale 19 de la barre 14' vienne en butée contre la fourche 17.

Pour passer en position de transport, le vérin tire sur la deuxième portion de poutre latérale 12 qui coulisse dans la première portion de poutre latérale 11 jusqu'à ce que la butée minimale 18 vienne en appui contre la fourche 16, puis la deuxième portion de poutre latérale 11 coulisse à l'intérieur de la portion de poutre centrale 10 jusqu'à ce que la butée minimale 18 vienne en butée contre la fourche 17.

Cette technique permet de régler efficacement l'espacement entre les éléments semeurs en position de travail et en position de transport en choisissant la position des butées sur les barres. Cette technique peut toutefois encore être améliorée.

En effet, dans la mesure où les barres 14, 14' coulissent derrière les éléments semeurs, il est nécessaire de les implanter de manière telle qu'elles n'entrent pas en interférence les unes avec les autres lors du passage en position de transport. Ceci suppose de les placer les unes au dessus des autres ou de les décaler latéralement les unes des autres ce qui tend à augmenter l'encombrement du semoir. En outre, le risque d'interférence entre les barres limite le nombre possible de position pour régler l'espacement entre les éléments semeurs. Par ailleurs, les barres ne s'étendent pas dans l'axe du vérin agissant sur les portions de poutre pour placer le semoir dans ses positions de transport et de travail. Ceci génère un arc-boutement induisant un télescopage difficile des portions de poutres et nécessitant parfois un surdimensionnement. Enfin, la manipulation des butées pour assurer le réglage des distances maximale et minimale entre les éléments semeurs n'est pas aisée.

La figure 2 illustre partiellement un semoir de l'art antérieur du type à éléments semeurs coulissants sur des poutres latérales.

Ainsi que cela est représenté sur cette figure 2, qui illustre une poutre latérale 20 d'un tel semoir, des supports 21 d'éléments semeurs (non représentés) sont montés mobiles en translation le long de cette poutre latérale 20. Chaque support 21 comprend de part et d'autre deux logements de verrouillage 22 prévus pour loger des axes de verrouillage 23.

Chaque support 21 d'élément semeur est relié au support 21 adjacent au moyen d'une barre d'espacement 24. Cette barre 24 comporte à chaque extrémité une lumière 240. Un axe 23 passe à travers chaque lumière 240 pour venir se loger dans un des logements de verrouillage 22.

L'extrémité distale de chaque lumière 240 forme une butée maximale 241, son extrémité proximale formant une butée minimale 242.

Lorsqu'un vérin d'entrainement solidaire de l'élément semeur situé à l'extrémité extérieure de la poutre pousse sur celui-ci pour placer le semoir en position de travail, cet élément semeur s'écarte du précédent jusqu'à ce que les axes 23 qui se déplacent à l'intérieur des lumières 240 viennent en butée contre les butées maximales 241 correspondantes, les autres éléments semeurs suivant ensuite le même processus.

Lorsque le vérin d'entrainement tire sur l'élément semeur d'extrémité pour placer le semoir en position de transport, cet élément semeur se rapproche du précédent jusqu'à ce que les axes 23 qui se déplacent à l'intérieur des lumières 240 viennent en butée contre les butées minimales 242 correspondantes, les autres éléments semeurs suivant ensuite le même processus.

Cette technique suppose, pour régler les distances minimale et maximale entre éléments semeurs adjacents de remplacer les barres d'espacement 24 par des barres de dimensions adéquates, ce qui est peu pratique. Le problème d'arc-boutement inhérent à la solution précédente se pose également dans cette solution. Le risque d'interférence des barres d'espacement et la limitation en conséquence du nombre possible de positions pour régler l'espacement entre les éléments semeurs se pose encore dans cette solution.

Il existe donc un besoin d'optimiser la fonction réglage de la distance inter rang des semoirs.

Le document FR 2 831 387 décrit une machine agricole comprenant un ensemble d'outils répartis sur un châssis et une installation de réglage d'écartement des outils comprenant une structure en forme de parallélogrammes déformables, permettant le réglage homogène et identique des distances séparant chaque outils, pour que chaque outils adjacents soient séparés d'une distance identique.

### Buts de l'invention

L'invention a notamment pour objectif d'apporter une solution qui ne présente pas les inconvénients de l'état de la technique.

La présente invention vise à fournir une alternative aux solutions de l'état de la technique existantes.

Un autre objectif de l'invention est de fournir une solution modulaire, permettant d'optimiser le réglage de la distance entre les éléments semeurs d'un semoir en position de transport et/ou de travail.

Notamment, l'invention a pour objectif de fournir une solution permettant d'éviter l'interférence entre les moyens de réglage de la distance entre les éléments semeurs.

Un autre objectif de l'invention est de fournir une solution permettant d'augmenter les possibilités de réglage de la distance entre les éléments semeurs.

Un autre objectif de l'invention est de procurer une solution permettant de faciliter le déplacement des éléments semeurs en limitant le risque d'arc-boutement.

L'invention poursuit encore l'objectif de procurer une solution qui soit compacte et permettant un gain de place entre les éléments semeurs.

Un autre objectif de l'invention est de procurer une telle technique permettant de simplifier le réglage de la distance entre les éléments semeurs.

Un autre objectif de l'invention est de procurer une solution qui soit simple de conception et/ou robuste et/ou économique.

### Résumé de l'invention

Selon l'invention, le semoir comprend un châssis et des éléments semeurs adjacents, solidaires du châssis et montés mobiles en translation les uns par rapport aux autres entre une position resserrée dans laquelle ils sont rapprochés et une position écartée dans laquelle ils sont éloignés, le semoir comprenant une pluralité de moyens de réglage, chaque moyens de réglage permettant un ajustement variable de la distance entre deux éléments semeurs adjacents donnés, indépendamment des autres moyens de réglage, et indépendamment de la distance entre deux autres éléments semeurs adjacents donnés sur le châssis, chaque moyens de réglage étant essentiellement localisés entre deux éléments semeurs adjacents donnés, dans chacun de leurs états et lors du passage de l'un à l'autre de leurs états, et chaque moyens de réglage comprenant au moins un élément de liaison flexible, chaque élément de liaison flexible reliant deux éléments semeurs adjacents et prenant un état replié lorsque les éléments semeurs sont dans la position resserrée et un état déployé lorsque les éléments semeurs sont dans la position écartée.

Selon des modes préférés de l'invention, le semoir selon l'invention comprend au moins une, ou une combinaison quelconque dans le cadre des revendications dépendantes, des caractéristiques suivantes.

La longueur de déploiement du au moins un élément de liaison flexible entre son état replié et son état déployé définit la distance, dans la position écartée, entre les éléments semeurs adjacents auxquels il est relié, les moyens de réglage comprenant des moyens de modification de la longueur de déploiement du au moins un élément de liaison flexible.

Le semoir comprend des moyens d'entrainement des éléments semeurs dans leur position écartée et dans leur position resserrée, les moyens d'entrainement agissant sur le ou les éléments semeurs situés le plus à l'extérieur du châssis, les éléments semeurs étant reliés deux-à-deux par les éléments de liaison flexible.

Le semoir peut être du type à poutre(s) télescopique(s) ou à poutre de longueur constante sur lesquelles les éléments semeurs sont montés coulissants.

Le au moins un élément de liaison flexible comprend une biellette et un lien flexible, la biellette étant reliée à l'une de ses extrémités à un des éléments semeurs adjacents par une liaison pivot d'axe essentiellement perpendiculaire à la direction de déplacement des éléments semeurs, et reliée à l'autre de ses extrémités à l'élément semeur adjacent au moyen du lien flexible, les moyens de modification de la longueur de déploiement comprenant une pluralités de points d'ancrage espacés les uns des autres le long de la biellette pour y relier le lien flexible en des points d'ancrage différents au choix pour définir la longueur de déploiement.

Le au moins un élément de liaison flexible comprend deux biellettes chacune reliée à l'une de ses extrémités à un des éléments semeurs adjacents par une liaison pivot d'axe essentiellement perpendiculaire à la direction de déplacement des éléments semeurs, les moyens de modification de la longueur de déploiement comprenant une pluralités de points d'ancrage espacés les uns des autres le long de chacune des biellettes pour y relier l'une à l'autre les biellettes en des points d'ancrage différents au choix pour définir la longueur de déploiement.

Dans ce cas, les biellettes sont préférentiellement reliées l'une à l'autre au moyen d'un lien flexible.

Les points d'ancrage comprennent une pluralité d'orifices dans lesquels peuvent être insérés des axes solidaires des extrémités du lien flexible.

Le ou les points de liaison de la ou des biellettes avec le ou les éléments semeurs adjacents et les points d'ancrage de la biellette avec le lien flexible ou des biellettes l'une à l'autre sont essentiellement alignés selon la direction de déplacement des éléments semeurs lorsqu'ils se trouvent dans leur position écartée et selon la direction des efforts d'entrainement des moyens d'entrainement.

Le lien flexible est un élément souple appartenant au groupe comprenant les :
- câble ;
- courroie ;
- corde.

Le lien flexible comprend des chainons articulés les uns aux autres.

Les biellettes sont essentiellement déployées l'une dans le prolongement de l'autre lorsque les éléments semeurs sont dans leur position écartée, et sensiblement repliées l'une par rapport à l'autre lorsque les éléments semeurs sont dans leur position resserrée.

Des moyens de rappel élastique tendent à ramener les biellettes l'une repliée par rapport à l'autre lors du passage desdits éléments semeurs de leur position écartée à leur position resserrée.

Les biellettes viennent en butée l'une contre l'autre lorsque les éléments semeurs sont dans leur position resserrée pour définir l'espace minimal entre les éléments semeurs adjacents dans leur position resserrée.

Le semoir peut comprendre au moins une butée contre laquelle viennent en appui les biellettes l'une repliée par rapport à l'autre pour définir l'espace minimal entre les éléments semeurs adjacents dans leur position resserrée.

Les moyens de modification de la longueur de déploiement du au moins un élément de liaison flexible comprennent des moyens de modification du chemin du au moins un élément de liaison flexible entre les éléments semeurs adjacents auxquels il est relié.

Le au moins un élément de liaison flexible comprend deux biellettes chacune reliée à l'une de ses extrémités à un des éléments semeurs adjacents par une liaison pivot d'axe essentiellement perpendiculaire à la direction de déplacement des éléments semeurs, les moyens de modification du chemin du au moins un élément de liaison flexible comprenant un guide auquel les biellettes sont articulées, le guide étant monté coulissant le long d'une tige située dans un plan passant par la direction de déplacement des éléments semeurs et essentiellement perpendiculaire aux axes des liaisons pivots, une pluralité de points d'ancrage étant espacés le long de la tige pour y solidariser au choix le guide pour définir la longueur de déploiement.

Selon une variante possible, un semoir selon l'invention comprend deux biellettes de stabilisation articulée chacune à l'une des biellettes et à la tige.

Les moyens de modification du chemin, du au moins un élément de liaison flexible entre les éléments semeurs adjacents auxquels il est relié, comprennent au moins une poulie, l'élément de liaison flexible s'enroulant autour de la poulie et se déroulant respectivement lors du passage des éléments semeurs dans la position resserrée et dans la position écartée, les moyens de modification comprenant des moyens de blocage de la rotation de la poulie à différents niveaux de déroulement de l'élément de liaison flexible, chaque niveau de déroulement définissant une distance entre deux éléments semeurs adjacents.

Les moyens de modification du chemin, du au moins un élément de liaison flexible entre les éléments semeurs adjacents auxquels il est relié, comprennent une pluralité de points d'ancrage solidaires d'au moins un des éléments semeurs adjacents , les points d'ancrage étant espacés les uns des autres essentiellement perpendiculairement à la direction de déplacement desdits éléments semeurs, au moins une extrémité de l'élément de liaison flexible pouvant être solidarisées à différents de ces points d'ancrage pour ajuster la longueur de déploiement de l'élément de liaison flexible, celui-ci étant guidé par au moins un renvoi d'angle s'étendant à une extrémité de la pluralité de points d'ancrage décalée de la direction de déplacement des éléments semeurs.

Les moyens de modification du chemin, du au moins un élément de liaison flexible entre les éléments semeurs adjacents auxquels il est relié, comprennent une pluralité de points d'ancrage solidaires d'au moins un des éléments semeurs adjacents les points d'ancrage étant espacés les uns des autres essentiellement perpendiculairement à la direction de déplacement des éléments semeurs, l'élément de liaison flexible formant une boucle pouvant entourer au moins un des points d'ancrage pour ajuster la longueur de déploiement de l'élément de liaison flexible.

Les moyens de réglage de la distance entre les éléments semeurs adjacents comprennent une pluralité de points d'ancrage solidaires d'au moins un des éléments semeurs adjacents, les points d'ancrage étant espacés les uns des autres essentiellement parallèlement à la direction de déplacement des éléments semeurs, au moins une des extrémités de l'élément de liaison flexible pouvant être solidarisées au choix à différents de ces points d'ancrage pour ajuster la distance entre les éléments semeurs en position écartée.

Au moins une extrémité libre de l'élément de liaison flexible porte une platine d'ancrage essentiellement en forme de V avec deux extrémités destinées à coopérer avec les points d'ancrage et un fond relié à une extrémité de l'élément de liaison flexible, les platines étant réversibles de telle sorte que ses extrémités puisse être orientées vers l'élément de liaison flexible ou vers l'extérieur de celui-ci pour modifier la distance entre les éléments semeurs adjacents en position écartée lorsque les platines coopère avec des points d'ancrage donnés.

D'autres caractéristiques et avantages de l'invention apparaîtront à la lecture de la description, suivant des modes de réalisation particuliers, donnée à titre de simple exemple illustratif et non limitatif, et des dessins annexés.

### Brève description des figures

La figure 1 illustre une vue partielle d'un semoir selon l'art antérieur du type à poutres latérales télescopiques.
La figure 2 illustre une vue partielle d'un semoir selon l'art antérieur du type à éléments semeurs coulissants sur des poutres latérales.
Les figures 3 à 10 illustrent un semoir selon un premier mode de réalisation de l'invention.
La figure 11 illustre un semoir selon un deuxième mode de réalisation de l 'i nvention.
Les figures 12 et 13 illustrent un semoir selon un troisième mode de réalisation de l'invention.
Les figures 14 et 15 illustrent un semoir selon un quatrième mode de réalisation de l'invention.
La figure 16 illustre un semoir selon un cinquième mode de réalisation de l'invention.
La figure 17 illustre un semoir selon un sixième mode de réalisation de l'invention.

### Description détaillée de l'invention

Le semoir 30 selon l'invention comprend classiquement un châssis 31 qui repose sur des roues 32. Ce châssis 31 comprend une poutre transversale 33 qui s'étend de part et d'autre du semoir 30. Cette poutre 33 pourra par exemple être unique ou comprendre deux portions articulées au niveau du milieu du semoir 30 pour être pivotées horizontalement ou verticalement l'une vers l'autre pour placer le semoir 30 en position de transport et être pivotées l'une dans le prolongement de l'autre pour placer le semoir 30 en position de travail.

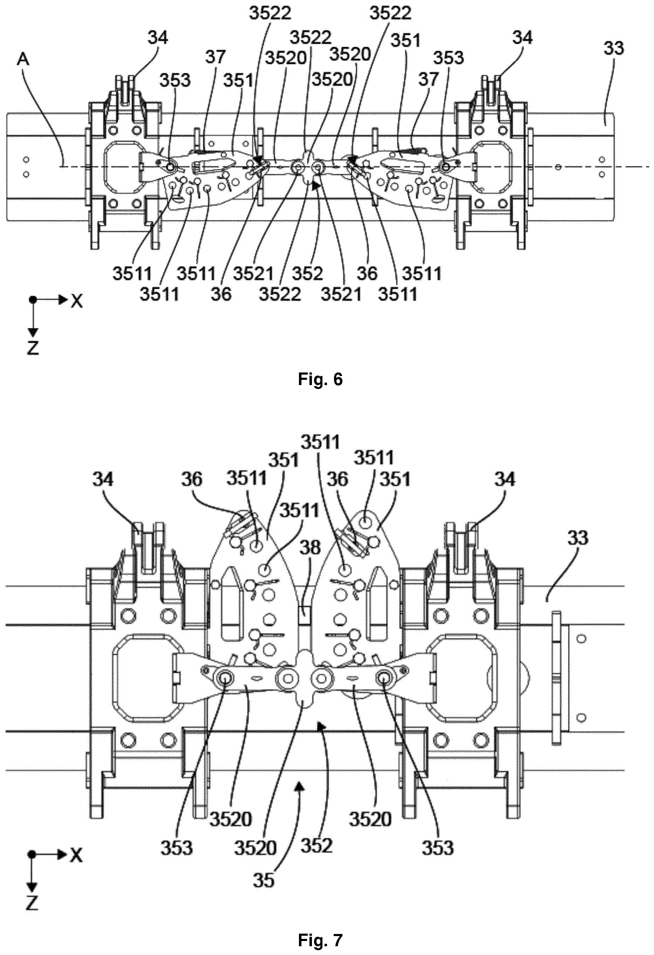

Des éléments semeurs 34 sont montés mobiles en translation sur la poutre 33 les uns à la suite des autres entre :
- une position resserrée (cf. figure 7) dans laquelle ils sont rapprochés les uns des autres, et
- une position écartée (cf. figure 6) dans laquelle ils sont éloignés les uns des autres.

Préférentiellement, la position resserrée sera prise pour placer le semoir 30 en position de transport alors que la position écartée sera prise lorsque le semoir 30 est en position de travail.

Le semoir 30 comprenant une pluralité de moyens de réglage de la distance entre deux éléments semeurs 34 adjacents. Chaque moyens de réglage se trouvent disposés entre chaque paire d'éléments semeurs 34 adjacents dont l'écartement est à modifier. Chaque moyens de réglage permettent un ajustement variable, une multitude d'ajustements possibles, de l'écartement entre deux éléments semeurs 34 adjacents donnés, ceux entre lesquels ils sont disposés. Chaque moyens de réglage sont mis en œuvre et configurés indépendamment de la mise en œuvre et/ou de la configuration des autres moyens de réglage, et indépendamment de la distance entre les autres paires d'éléments semeurs 34 adjacents du châssis 31. Ainsi, il est possible d'obtenir un semoir 30 totalement modulable, dans lequel l'écartement entre chaque paire, ou certaines des paires, des éléments semeurs 34 adjacents, est identique ou bien différent.

Les éléments semeurs 34 sont reliés deux à deux par un élément de liaison flexible 35. Chaque élément de liaison flexible 35 est susceptible de prendre un état replié et un état déployé, les moyens de réglage correspondant restant essentiellement localisés entre les éléments semeurs 34 adjacents dans chacun de leurs états et lors du passage de l'un à l'autre de leurs états.

De cette façon, on évite la collision entre les moyens de réglage mis en œuvre pour définir la distance entre chaque pair d'éléments semeurs adjacents, et on augmente en conséquence le nombre de positions de réglage possible.

Les moyens de réglage restant essentiellement entre deux éléments semeurs, on diminue l'encombrement derrière eux, ce qui permet de gagner de la place et d'obtenir un semoir plus compact.

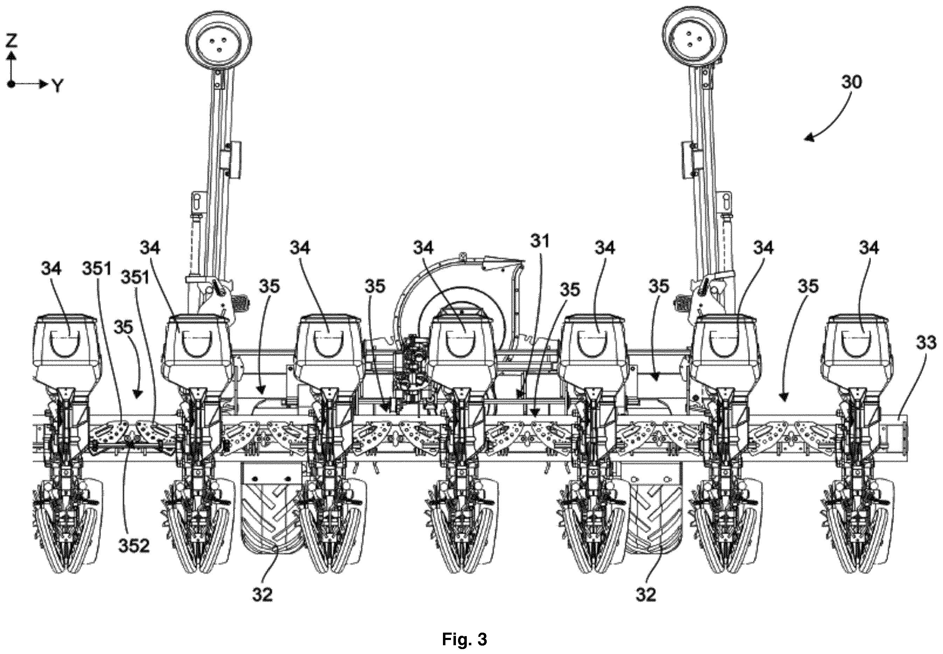

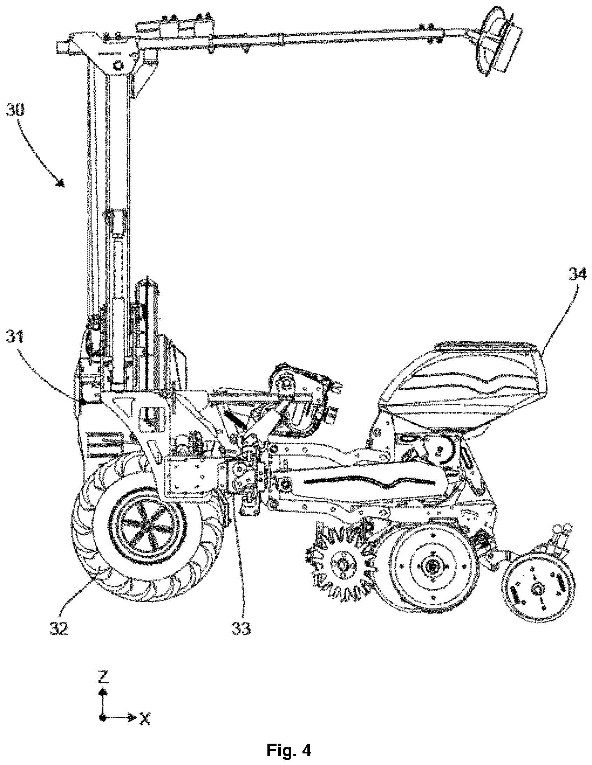

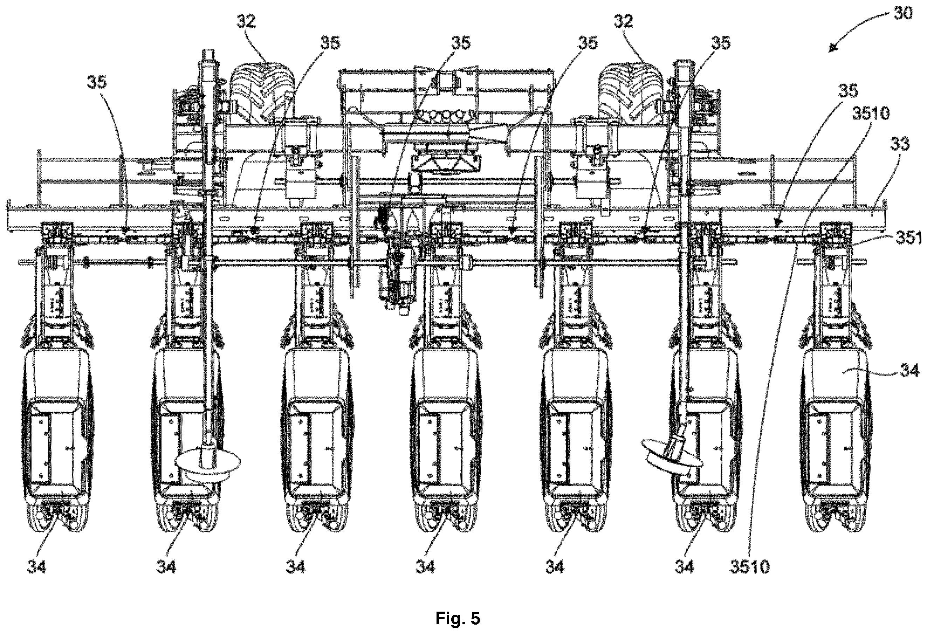

Dans le mode de réalisation illustré aux figures 3 à 5, chaque élément de liaison flexible comprend deux biellettes 351.

Chaque biellette 351 est reliée à l'une de ses extrémités à un élément semeur 34 au moyen d'une liaison pivot 353 d'axe essentiellement perpendiculaire à la direction de déplacement des éléments semeurs le long de la poutre 33.

Les biellettes 351 sont interconnectées à l'autre de leurs extrémités au moyen d'un lien flexible 352. Chaque biellette 351 comprend ici deux plaques 3510 parallèles et distantes.

Ainsi que cela est représenté sur les figures 3 à 7, le lien flexible 352 comprend une pluralité de chainons 3520 articulés les uns aux autres par des liaisons pivots 3521 d'axes essentiellement parallèles aux axes des liaisons pivot 353. Chaque extrémité du lien flexible 352 est reliée à l'une des billettes 351 par une liaison pivot 3522 d'axe essentiellement parallèle aux axes des liaisons pivot 353. Le chainon central comprend ici deux oreilles de préhension 3522 formant saillie de part et d'autre pour faciliter la manipulation de celui-ci.

Chaque biellette 351 comprend une pluralité de points d'ancrage 3511 qui sont espacés les uns des autres le long de la biellette 351. Ces points d'ancrage sont ici constitués d'orifices qui traversent les biellettes 351. Ces orifices 3511 permettent le passage d'axes de verrouillage 36 à travers les biellettes 351 et à travers des trous de forme complémentaire (non représentés) ménagés aux extrémités du lien flexible 352. Il est ainsi possible de relier, l'une à l'autre, deux biellettes adjacentes au moyen d'un lien flexible.

L'élément de liaison flexible 35 peut prendre deux états :
- un état replié (cf. figure 7) pris lorsque les éléments semeurs sont en position resserrée, et
- un état déployé (cf. figure 6) pris lorsque les éléments semeurs sont en position écartée.

Le semoir 30 comprend des moyens de réglage de la distance entre éléments semeurs 34 adjacents. La longueur de déploiement de l'élément de liaison flexible 35, entre son état replié et son état déployé, définit la distance, dans la position écartée, entre les éléments semeurs 34 adjacents auxquels il est relié. Ces moyens de réglage permettent en conséquence plus précisément de régler la longueur de déploiement de l'élément de liaison flexible 35.

Les points d'ancrage 3511 constituent des moyens de modification de la longueur de déploiement de l'élément de liaison flexible 35.

Ainsi, plus les points d'ancrage 3511 utilisés pour relier les extrémités du lien flexible 352 seront proches de l'extrémités des biellettes 351 solidaires des éléments semeurs 34, plus la distance entre les éléments semeurs en position écartée sera faible. Inversement, plus les points d'ancrage 3511 utilisés pour relier les extrémités du lien flexible 352 seront éloignés de l'extrémité des biellettes 351 solidaires des éléments semeurs 34, plus la distance entre les éléments semeurs en position écartée sera importante.

Pour procéder au réglage de la distance séparant les éléments semeurs en position écartée, l'utilisateur choisira donc les points d'ancrage 3511 adaptés en y solidarisant les extrémités du lien flexible 352 au moyen des axes 36 maintenus en position par exemple au moyens de goupilles.

Les biellettes 351 sont essentiellement déployées l'une dans le prolongement de l'autre lorsque les éléments semeurs 34 sont dans leur position écartée (figure 6). Elles sont sensiblement repliées l'une par rapport à l'autre lorsque les éléments semeurs 34 sont dans leur position resserrée (figure 7).

Le contour extérieur des extrémités des biellettes 351 orientées l'une vers l'autre en position resserrée forment au moins en partie une courbure dont le centre se situe du côté de l'élément semeur 34 correspondant. Les points d'ancrage 3511 suivent essentiellement ce contour. Ceci permet d'éviter l'interférence entre deux biellettes 351 adjacentes et d'augmenter le nombre possible de positions de réglage.

Des moyens de rappel élastique, comme par exemple des ressorts 37 tendent à ramener les biellettes 351 l'une repliée par rapport à l'autre lors du passage des éléments semeurs 34 de leur position écartée à leur position resserrée.

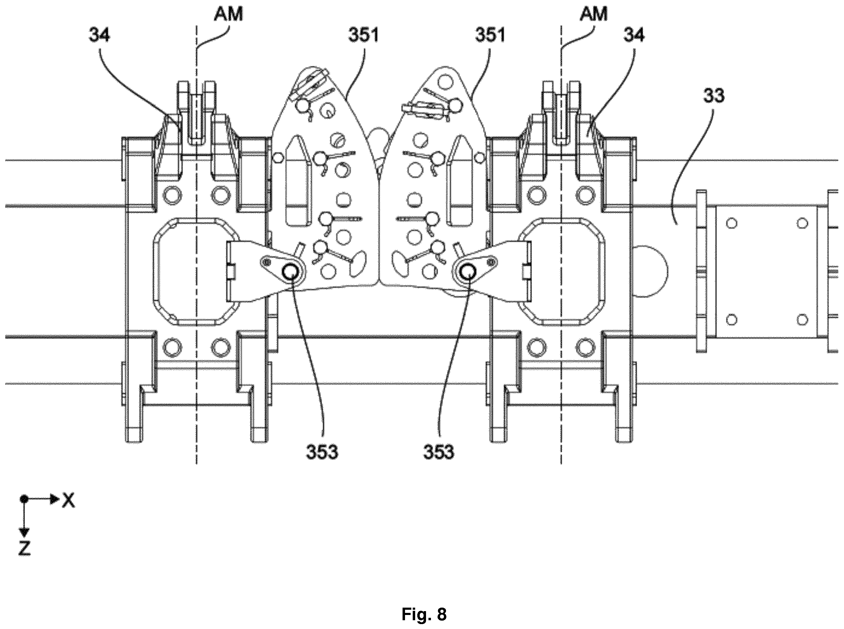

Les biellettes 351 viennent en butée l'une contre l'autre, sur leur surface orientée l'une vers l'autre, lorsque les éléments semeurs 34 sont dans leur position resserrée pour définir l'espace minimal entre les éléments semeurs 34 adjacents dans leur position resserrée (cf. figure 8).

Les biellettes 351 viennent également en butée l'une contre l'autre, sur leur surface orientée l'élément semeur 34 correspondant, lorsque les éléments semeurs 34 sont dans leur position resserrée, pour définir l'espace minimal entre les éléments semeurs 34 adjacents dans leur position resserrée (cf. figure 8).

Dans une variante, le semoir 30 comprend au moins une butée 38 contre laquelle viennent en appui les biellettes 351 adjacentes l'une repliée par rapport à l'autre, pour définir la distance minimale entre les éléments semeurs 34 adjacents dans leur position resserrée (cf. figure 7). Cette butée peut être de largeur fixe ou variable, ou encore amovible et remplaçable par des butées de largeur différentes, pour permettre de régler la distance minimale entre les éléments semeurs 34 adjacents dans leur position resserrée.

Le semoir 30 comprend classiquement des moyens d'entrainement des éléments semeurs 34 dans leur position écartée et dans leur position resserrée. Ces moyens d'entrainement peuvent par exemple comprendre deux vérins disposés de part et d'autre du semoir ayant chacun une extrémité mobile reliée à un des éléments semeurs 34 situés le plus à l'extérieur du châssis, et une autre extrémité fixe située vers le milieu du semoir 30.

Les éléments semeurs 34 étant reliés deux à deux au moyen des éléments de liaison flexibles 35, le passage dans la position écartée est obtenu de la manière suivante : le vérin pousse sur l'élément semeur 34 situé le plus à l'extérieur de telle sorte qu'il soit écarté de l'élément semeur 34 adjacent précédent jusqu'à ce que l'élément de liaison flexible 35 correspondant soit en tension dans son état déployé, puis l'avant dernier élément semeur 34 s'écarte du précédent jusqu'à ce que l'élément de liaison flexible 35 correspondant soit en tension, ce phénomène se répétant, de part et d'autre du semoir, jusqu'à ce que tous les éléments semeurs 34 soient en position écartée.

Inversement, le passage dans la position resserrée est obtenu de la manière suivante : le vérin tire sur l'élément semeur 34 situé le plus à l'extérieur de telle sorte qu'il soit rapproché de l'élément semeur 34 adjacent précédent jusqu'à ce que l'élément de liaison flexible 35 correspondant soit replié dans son état replié, puis l'avant dernier élément semeur 34 s'écarte du précédent jusqu'à ce que l'élément de liaison flexible 35 correspondant soit en tension, ce phénomène se répétant, de part et d'autre du semoir, jusqu'à ce que tous les éléments semeurs 34 soient en position écartée.

Les points de liaison des biellettes 351 avec lesdits éléments semeurs 34 adjacents, c'est-à-dire les liaisons pivot 353, et les points d'ancrage 3511 des biellettes 351 l'une à l'autre sont essentiellement alignés selon la direction de déplacement « A » des éléments semeurs 34 (comme illustré à la figure 6) lorsqu'ils se trouvent dans leur position écartée et selon la direction des efforts d'entrainement des moyens d'entrainement, tel que cela est visible sur la figure 6. On évite ainsi les phénomènes d'arc-boutement et facilite en conséquence le passage des éléments semeurs de l'une à l'autre de leurs positions.

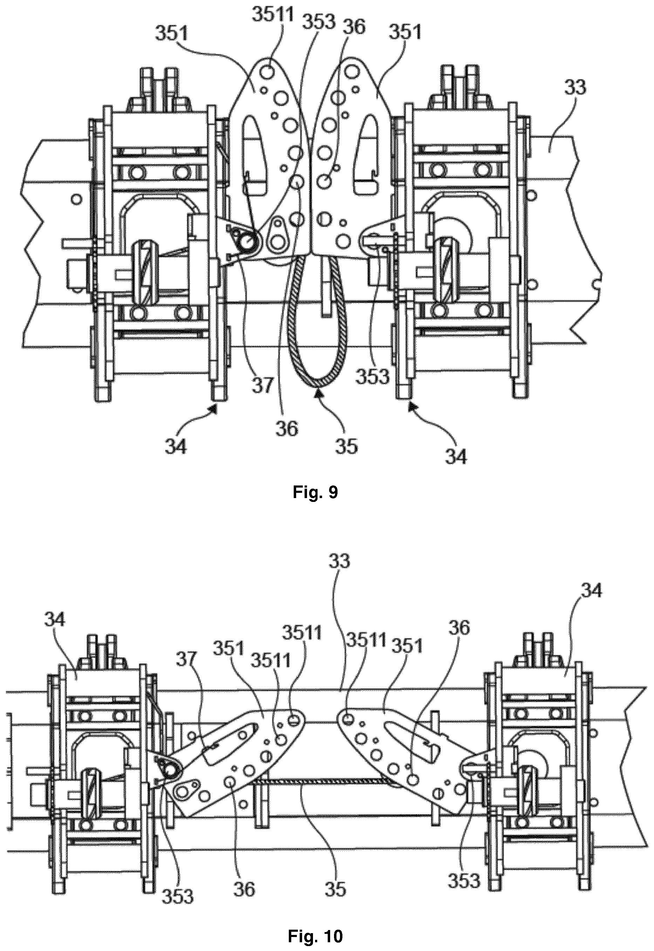

Dans la variante illustrée aux figures 9 et 10, le lien flexible 352, plutôt qu'être constitué de chainons articulés les uns aux autres à la manière d'une chaine, celui-ci comprend un élément souple appartenant au groupe comprenant les :
- câble ;
- courroie ;
- corde.

Dans une variante, non représentée, les biellettes 351 pourront être interconnectées de manière articulée sans interposition d'un lien flexible 352 entre-elles. Dans ce cas, elles pourront être plaquées latéralement l'une contre l'autre et unies par un axe passant à travers les points d'ancrage 3511. Une des biellettes 351 pourra encore comprend deux plaques 3510 espacées et former une fourche à l'intérieur de laquelle viendra s'insérer l'autre biellette constituée d'une unique plaque.

Dans une autre variante, seule une biellette pourra être mise en œuvre. L'une de ses extrémités sera alors reliée à un élément semeur 34 directement alors que l'autre sera reliée à l'élément semeur 34 adjacent au moyen d'un lien flexible.

Ainsi que cela est visible notamment sur les figures 6 et 7, chaque élément de liaison flexible 35 et les moyens de réglage correspondant restent localisés entre les éléments semeurs 34 adjacents correspondants dans chacun de leurs états et lors du passage de l'un à l'autre de leurs états. Ceci est en opposition avec les techniques de l'art antérieur selon lesquelles ces éléments de liaison et réglages coulissent derrière les éléments semeurs 34 ce qui induit un risque de collision.

Préférentiellement, les moyens de réglage, en particulier l'élément de liaison, restent localisés entre les éléments semeurs 34 adjacents correspondants dans chacun de leurs états et lors du passage de l'un à l'autre de leurs états, à tout le moins selon la direction de déplacement des éléments semeurs 34 le long de la poutre, mais pas nécessairement selon une direction perpendiculaire à cette dernière. Toutefois, les moyens de réglage pourront ne rester que partiellement entre les éléments semeurs 34 adjacents et s'étendre entre les axes médians AM (figure 8) des éléments semeurs 34 adjacents. En tout état de cause, les moyens de réglage, en particulier l'élément de liaison 35, respectifs de plusieurs couples d'éléments semeurs 34 adjacents passeront respectivement de l'un à l'autre de leurs états sans entrer en collision tout en étant disposés essentiellement dans un même plan.

La solution selon l'invention présente l'avantage d'éviter ce risque de collision, d'augmenter en conséquence le nombre de réglages possibles et de diminuer l'encombrement du semoir 30 en particulier entres les éléments semeurs 34.

D'autres modes de réalisation sont à présents décrits. Les principales différences entre ces modes et le premier mode étant plus particulièrement détaillées.

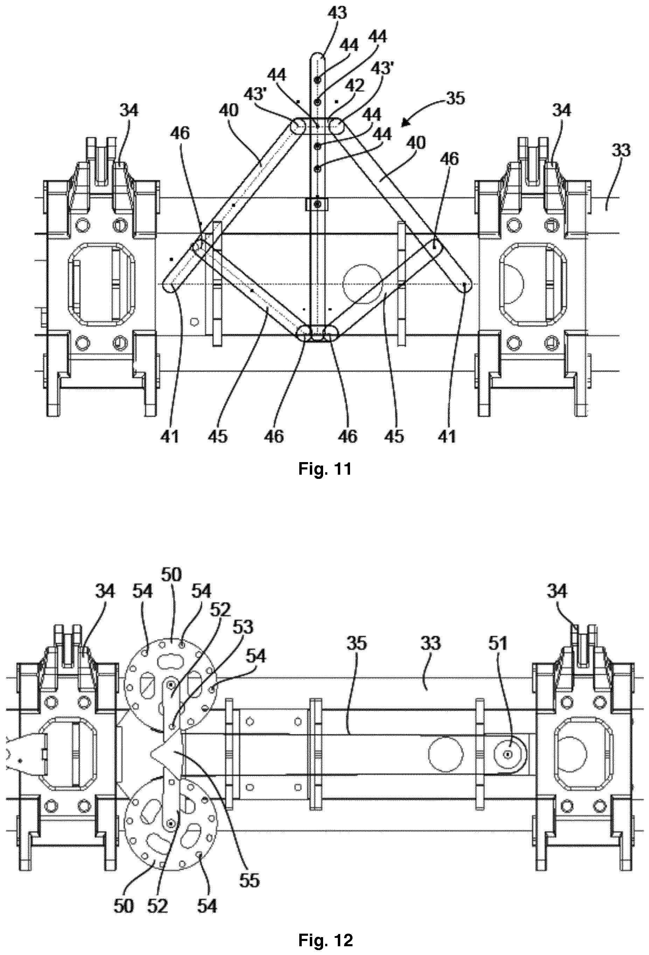

La figure 11 illustre un autre mode de réalisation dans lequel l'élément de liaison flexible 35 reliant deux éléments semeurs 34 adjacents comprend deux biellettes 40 chacune reliée à l'une de ses extrémités à un des éléments semeurs 34 adjacents par une liaison pivot 41 d'axe essentiellement perpendiculaire à la direction de déplacement des éléments semeurs 34. L'autre extrémité des biellettes 40 est liée de manière articulée par une liaison pivot 42 d'axe essentiellement perpendiculaire à la direction de déplacement des éléments semeurs à un guide 42. Le guide 42 est monté coulissant le long d'une tige 43 située dans un plan passant par la direction de déplacement des éléments semeurs 34 et essentiellement perpendiculaire aux axes des liaisons pivots 43. Des points d'ancrage 44, par exemple constitués de trous, sont espacés les uns des autres le long de la tige 43 pour y solidariser au choix le guide 42, par exemple au moyen d'un axe traversant le trou correspondant et de goupilles. Le déplacement du guide 42 le long de la tige 43 et sa solidarisation au point d'ancrage souhaité permet de modifier le chemin de l'élément de liaison flexible 35 entre les éléments semeurs 34 adjacents auxquels il est relié et ainsi de modifier longueur de déploiement de l'élément de liaison flexible 35. Plus le point d'ancrage choisi sera éloigné de la poutre 33, plus la distance entre les éléments semeurs 34 adjacents en position écartée sera faible, et inversement.

Deux biellettes de stabilisation 45 sont chacune articulées au moyen d'une liaison pivot d'axe essentiellement perpendiculaire à la direction de déplacement des éléments semeurs respectivement à l'une des biellettes 40 et à ladite tige 43.

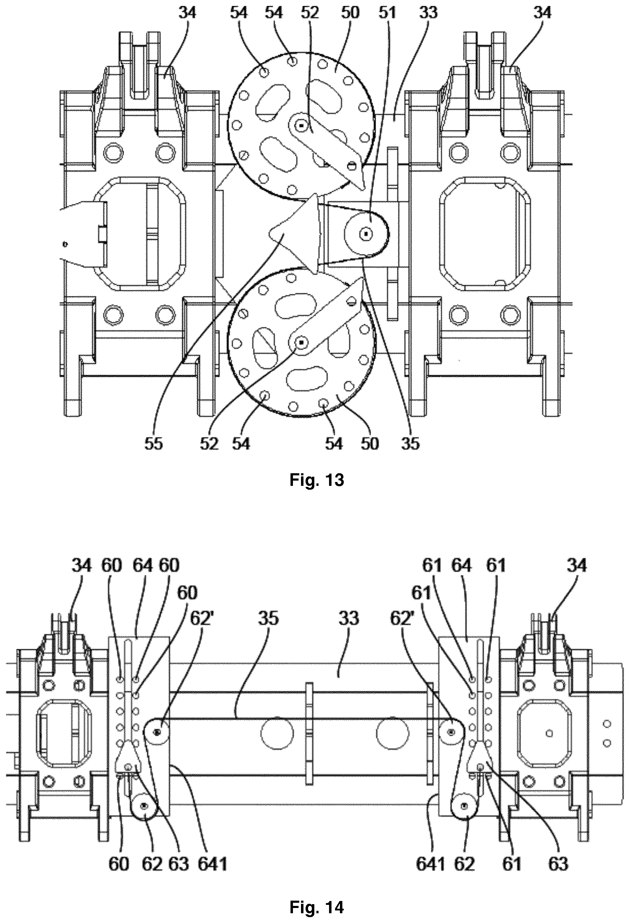

Les figures 12 et 13 illustrent un troisième mode de réalisation dans lequel un des éléments semeurs 34, parmi deux éléments semeurs 34 adjacents, porte deux poulies 50 montées mobiles en rotation selon des axes essentiellement perpendiculaires à la direction de déplacement des éléments semeurs sur la poutre 33. Un renvoi d'angle 51, par exemple une poulie, est solidaire de l'autre élément semeur 34.

Chaque extrémité libre de l'élément de liaison flexible 35 est reliée à une des poulies 50, l'élément de liaison flexible 35 s'étendant de l'une à l'autre des poulies 50 en passant autour du renvoi d'angle 51.

Chaque poulie 50 porte une butée mobile 52 susceptible d'être entrainée en rotation par rapport à la poulie autour de l'axe de celle-ci et d'y être solidarisée en rotation dans diverses positions angulaires en faisant passer un axe 53 dans l'un des orifices de blocage 54 ménagés à cet effet à la périphérie de la poulie 50.

Une butée fixe 55 est disposée entre les deux poulies 50 pour servir d'appui aux butées mobiles 52.

L'élément de liaison flexible 35 s'enroule autour des poulies 50 et se déroule respectivement lors du passage des éléments semeurs 34 dans la position resserrée et dans la position écartée. Des moyens de rappel agissent sur les poulies 50 dans le sens de l'enroulement de l'élément de liaison flexible.

Les butées mobiles 52 et fixe 55 constituent des moyens de blocage de la rotation des poulies 50 à différents niveaux de déroulement de l'élément de liaison flexible 35, chaque niveau de déroulement définissant une distance entre deux éléments semeurs 34 adjacents en position écartée.

Pour régler le longueur de déploiement de l'élément de liaison flexible 35, et par là même la distance entre les éléments semeurs 34 adjacents en position écartée, l'utilisateur définit le niveau de déroulement autorisé en bloquant les butées mobiles 52 à l'orifice de blocage 54 correspondant.

Dans une variante, une seule poulie 50 pourra être mise en œuvre. Dans ce cas, l'extrémité de l'élément de liaison flexible 35 non reliée à la poulie sera reliée à l'autre élément semeurs sans renvoi d'angle.

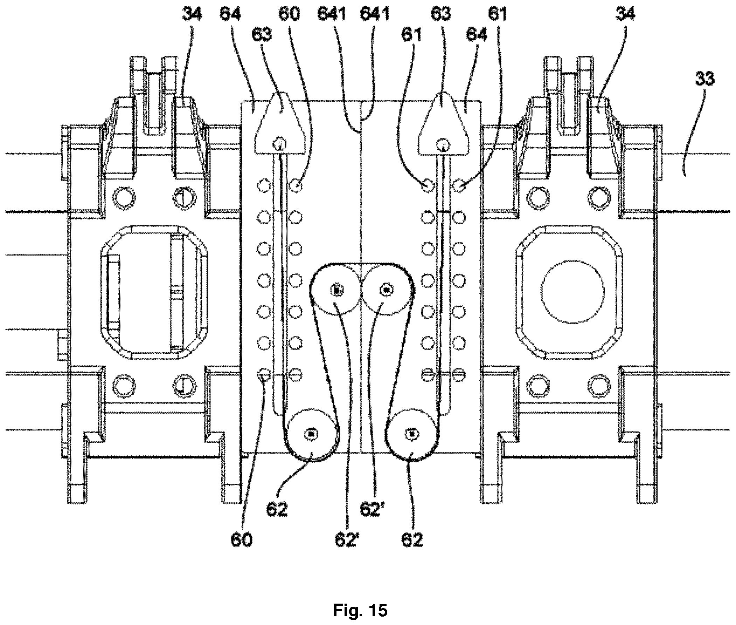

Les figures 14 et 15 illustrent un quatrième mode de réalisation dans lequel le semoir 30 comprend une pluralité de premiers points d'ancrage 60 solidaires d'un des éléments semeurs 34 et une pluralité de deuxièmes points d'ancrage 61 solidaires de l'éléments semeurs 34 adjacent.

Les premiers 60 et deuxièmes 61 points d'ancrage sont espacés les uns des autres essentiellement perpendiculairement à la direction de déplacement des éléments semeurs 34 le long de la poutre 33.

Les extrémités de l'élément de liaison flexible 35 peuvent être respectivement solidarisées à différents de ces premiers 60 et deuxièmes 61 points d'ancrage pour ajuster la longueur de déploiement de l'élément de liaison flexible 35, celui-ci étant guidé par des renvois d'angle 62, 62' comprenant par exemple des poulies.

Deux renvois d'angle 62' se situent dans la direction de déplacement des éléments semeurs 34. Ceux-ci ne sont pas indispensables mais permettent une meilleure répartition des efforts. Les deux autres renvois d'angle 62 se trouvent décalés d'un côté de cette direction.

Plus les extrémités 63 de l'élément de liaison flexible 35 seront solidarisées aux points d'ancrage 60, 61 les plus éloignés des renvois d'angles 62 écartés de la direction de déplacement des éléments semeurs 34, plus la longueur de déploiement de l'élément de liaison flexible 35 sera réduite et plus la distance entre les éléments semeurs en position écartée sera faible. Inversement, plus les extrémités 63 de l'élément de liaison flexible 35 seront solidarisées aux points d'ancrage 60, 61 les plus proches des renvois d'angles 62 écartés de la direction de déplacement des éléments semeurs 34, plus la longueur de déploiement de l'élément de liaison flexible 35 sera importante et plus la distance entre les éléments semeurs en position écartée sera élevée.

Les points d'ancrage 60, 61 sont placés sur des platines 64 dont les parois latérales 641 en regard l'une de l'autre serve de butées définissant l'espace minimum entre éléments semeurs adjacents en position resserrée.

Dans une variante, seule une série de points d'ancrage 60 ou 61 pourra être mis en œuvre sur l'un ou l'autre des éléments semeurs 34 adjacents. Dans ce cas, l'une des extrémités de l'élément de liaison flexible 35 est fixe par rapport à l'un des éléments semeurs 34 alors que l'autre peut être solidarisée au choix à l'un des points d'ancrage solidaires 60, 61 de l'autre élément semeur 34 adjacent pour ajuster la distance entre les éléments semeurs 34 en position écartée.

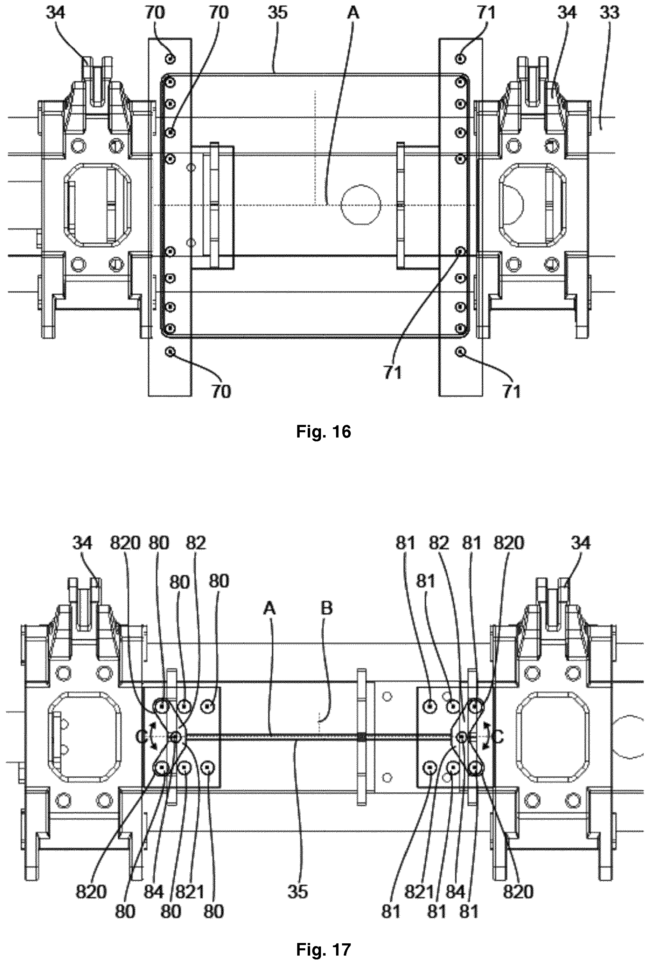

La figure 16 illustre un cinquième mode de réalisation dans lequel le semoir 30 comprend une pluralité de premiers points d'ancrage 70 solidaires d'un éléments semeurs 34 et une pluralité de deuxièmes points d'ancrage 71 solidaires de l'éléments semeurs 34 adjacent.

Les premiers 70 et deuxièmes 71 points d'ancrage sont espacés les uns des autres essentiellement perpendiculairement à la direction de déplacement des éléments semeurs 34 le long de la poutre 33.

L'élément de liaison flexible 35 forme une boucle pouvant entourer au moins un des premiers points d'ancrage 70 et au moins un des deuxièmes points d'ancrage 71 pour ajuster la longueur de déploiement de l'élément de liaison flexible 35.

Le choix des points d'ancrages 70, 71 encerclés par l'élément de liaison flexible 35 permettra à l'utilisateur de définir la longueur de déploiement de celui-ci et la distance entres les éléments semeurs 34 adjacents en position écartée.

La distance entre éléments semeurs adjacentes en position écartée la plus grande sera obtenue en faisant passer l'élément de liaison flexible 35 autour du premier 70 et du deuxième 71 points d'ancrage situés dans l'axe de la direction de déplacement A des élément semeurs le long de la poutre 33.

Plus les premiers 70 et deuxièmes 71 points d'ancrage autour desquels passera l'élément de liaison flexible 35 seront éloignés de l'axe de la direction de déplacement A des éléments semeurs 34, plus la distance entre éléments semeurs 34 adjacents en position écartée sera faible.

Dans une variante, seule une série de points d'ancrage 70 ou 71 pourra être mis en œuvre sur l'un ou l'autre des éléments semeurs 34 adjacents. Dans ce cas, l'une des extrémités de l'élément de liaison flexible 35 est fixe par rapport à l'un des éléments semeurs 34 alors que l'autre peut être solidarisée au choix à l'un des points d'ancrage solidaires 70, 71 de l'autre élément semeur 34 adjacent pour ajuster la distance entre les éléments semeurs 34 en position écartée.

La figure 17 illustre un sixième mode de réalisation dans lequel le semoir 30 comprend une pluralité de premiers points d'ancrage 80 solidaires d'un élément semeurs 34 et une pluralité de deuxièmes points d'ancrage 81 solidaires de l'élément semeur 34 adjacent.

Les premiers 80 et deuxièmes 81 points d'ancrage sont espacés les uns des autres essentiellement parallèlement à la direction de déplacement A des éléments semeurs 34 le long de la poutre 33.

Chaque extrémité de l'élément de liaison flexible 35 comprend une platine de fixation 82 prévue pour coopérer avec les moyens d'ancrage 80, 81.

Ces platines de fixation 83 peuvent être respectivement solidarisées au choix à différents de ces premiers 80 et deuxièmes 81 points d'ancrage pour ajuster la distance entre les éléments semeurs 34 en position écartée.

Plus les points d'ancrage 80, 81 utilisés seront proches de l'axe B entre les éléments semeurs 34 adjacents, plus la distance entre les éléments semeurs 34 en position écartée sera importante. Inversement, plus les points d'ancrage 80, 81 utilisés seront éloignés de l'axe B entre les éléments semeurs 34 adjacents, plus la distance entre les éléments semeurs 34 en position écartée sera faible.

Dans une variante, chaque platine 83 est montée pivotante à l'extrémité correspondante de l'élément de liaison flexible 35, par exemple au moyen d'une liaison 84 pivot d'axe essentiellement perpendiculaire à la direction de déplacement des éléments semeurs le long de la poutre 33. Chaque platine 83 est ainsi pivotable sur 180° selon la flèche C.

Dans ce cas, les platines d'ancrage 82 ont essentiellement en forme de V ou de U avec deux extrémités 820 destinées à coopérer avec lesdits points d'ancrage 80, 81 et un fond 821 relié à une extrémité de l'élément de liaison flexible 35.

Du fait de leur réversibilité, leurs extrémités 820 peuvent être orientées vers l'élément de liaison flexible 35 ou vers l'extérieur de celui-ci.

Cette réversibilité permet d'augmenter le nombre de réglages possibles pour un nombre donné de points d'ancrage. Dans le mode de réalisation illustré, chaque groupe de premiers 80 et deuxièmes 81 points d'ancrage comprend trois paires de points d'ancrage autorisant chacune trois réglages. Le fait de pivoter une platine de fixation 82 permet pour chaque paire de points d'ancrage de multiplier par deux le nombre de réglages possibles.

Dans une variante, seule une série de points d'ancrage 80 ou 81 pourra être mis en œuvre sur l'un ou l'autre des éléments semeurs 34 adjacents. Dans ce cas, l'une des extrémités de l'élément de liaison flexible 35 est fixe par rapport à l'un des éléments semeurs 34 alors que l'autre peut être solidarisée au choix à l'un des points d'ancrage solidaires de l'autre élément semeur 34 adjacent pour ajuster la distance entre les éléments semeurs 34 en position écartée.

Les différents modes de réalisation décrits précédemment concernent des semoirs 30 du type à élément semeurs coulissants sur une poutre. Le semoir 30 selon l'invention peut alternativement être du type à poutre(s) latérale(s) télescopique(s).

Dans une variante, l'élément de liaison 35 entre éléments semeurs 34 adjacents pourra être constitué par une barre télescopique comprenant plusieurs portions de barre, cette barre pouvant se déployer par téléscopage étant munie d'une pluralité de longueur de déploiement au choix.

De manière plus générale, l'élément de liaison entre éléments semeurs 34 adjacents, est un élément déployable (par exemple par dépliage s'il est souple et/ou articulé, ou par téléscopage s'il est téléscopique...) entre les éléments semeurs 34 adjacents pour prendre ses états déployé ou replié. Bien entendu, s'il est flexible (en particulier s'il est articulé et/ou souple), il sera possible de réduire davantage la distance minimale entre éléments semeurs adjacents.

Toutes les variantes décrites permettent de procéder de manière simple et efface au réglage de la distance inter rang sans outillage particulier ou spécifique.

## Revendications

1. Semoir (30) comprenant un châssis (31) et des éléments semeurs (34) adjacents, solidaires dudit châssis (31) et montés mobiles en translation les uns par rapport aux autres, entre une position resserrée dans laquelle lesdits éléments semeurs (34) sont rapprochés et une position écartée dans laquelle ils sont éloignés, ledit semoir (30) comprenant une pluralité de moyens de réglage, chaque moyens de réglage permettant un ajustement variable de la distance entre deux éléments semeurs (34) adjacents donnés, indépendamment des autres moyens de réglage, et indépendamment de la distance entre deux autres éléments semeurs (34) adjacents donnés sur ledit châssis(31), chaque moyens de réglage étant essentiellement localisés entre deux éléments semeurs (34) adjacents donnés, dans chacun de leurs états et lors du passage de l'un à l'autre de leurs états, et chaque moyens de réglage comprenant au moins un élément de liaison flexible (35), chaque élément de liaison flexible (35) reliant deux éléments semeurs (34) adjacents et prenant un état replié lorsque lesdits éléments semeurs (34) sont dans ladite position resserrée et un état déployé lorsque lesdits éléments semeurs (34) sont dans ladite position écartée.

2. Semoir (30) selon la revendication 1 dans lequel la longueur de déploiement du au moins un élément de liaison flexible (35), entre son état replié et son état déployé, définit la distance, dans ladite position écartée, entre les éléments semeurs (34) adjacents auxquels il est relié, les moyens de réglage comprenant des moyens de modification de la longueur de déploiement dudit au moins un élément de liaison flexible (35).

3. Semoir (30) selon l'une des revendications 1 ou 2 comprenant des moyens d'entrainement des éléments semeurs (34) dans leur position écartée et dans leur position resserrée, lesdits moyens d'entrainement agissant sur le ou les éléments semeurs (34) situés le plus à l'extérieur dudit châssis (31), lesdits éléments semeurs (34) étant reliés deux-à-deux par les éléments de liaison flexible (3).

4. Semoir (30) selon l'une quelconque des revendications 2 ou 3, dans lequel ledit au moins un élément de liaison flexible (35) comprend une biellette (351) et un lien flexible (352), ladite biellette (351) étant reliée à l'une de ses extrémités à un des éléments semeurs (34) adjacents par une liaison pivot (353) d'axe essentiellement perpendiculaire à la direction de déplacement desdits éléments semeurs (34), et reliée à l'autre de ses extrémités à l'élément semeur adjacent (34) au moyen dudit lien flexible (352), lesdits moyens de modification de la longueur de déploiement comprenant une pluralités de points d'ancrage (3511) espacés les uns des autres le long de ladite biellette (351) pour y relier ledit lien flexible (352) en des points d'ancrage (3511) différents au choix pour définir ladite longueur de déploiement.

5. Semoir (30) selon l'une quelconque des revendications 2 ou 3 dans lequel le au moins un élément de liaison flexible (35) comprend deux biellettes (351) chacune reliée à l'une de ses extrémités à un des éléments semeurs (34) adjacents par une liaison pivot (353) d'axe essentiellement perpendiculaire à la direction de déplacement desdits éléments semeurs (34), lesdits moyens de modification de la longueur de déploiement comprenant une pluralités de points d'ancrage (3511) espacés les uns des autres le long de chacune desdites biellettes (351) pour y relier l'une à l'autre lesdites biellettes (351) en des points d'ancrage (3511) différents au choix pour définir ladite longueur de déploiement.

6. Semoir (30) selon la revendication 5 dans lequel les biellettes (351) sont reliées l'une à l'autre au moyen d'un lien flexible (352).

7. Semoir (30) l'une quelconque des revendications 4 ou 6 dans lequel les points d'ancrage (3511) comprennent une pluralité d'orifices dans lesquels peuvent être insérés des axes (36) solidaires des extrémités du lien flexible (352).

8. Semoir (30) selon les revendications 3 et 4, ou la revendication 3 et l'une quelconque des revendication 5 à 7, dans lequel le ou les points de liaison de la ou des biellettes (351) avec le ou les éléments semeurs (34) adjacents et les points d'ancrage de la biellette (351) avec le lien flexible (352) ou des biellettes (351) l'une à l'autre sont essentiellement alignés selon la direction de déplacement des éléments semeurs (34) lorsqu'ils se trouvent dans leur position écartée et selon la direction des efforts d'entrainement des moyens d'entrainement.

9. Semoir (30) selon la revendication 4 ou l'une quelconque des revendications 6 à 8, dans lequel le lien flexible (352) est un élément souple appartenant au groupe comprenant les :
- câble ;
- courroie ;
- corde.

10. Semoir (30) selon la revendication 4, ou l'une quelconque des revendications 6 à 8, dans lequel le lien flexible (352) comprend des chainons (3520) articulés les uns aux autres.

11. Semoir (30) selon l'une quelconque des revendications 5 à 10, dans lequel les biellettes (351) sont essentiellement déployées l'une dans le prolongement de l'autre lorsque les éléments semeurs (34) sont dans leur position écartée, et sensiblement repliées l'une par rapport à l'autre lorsque lesdits éléments semeurs (34) sont dans leur position resserrée.

12. Semoir (30) selon la revendication 11, comprenant des moyens de rappel élastique (37) tendant à ramener les biellettes (351) l'une repliée par rapport à l'autre lors du passage des éléments semeurs (34) de leur position écartée à leur position resserrée.

13. Semoir (30) selon la revendication 11 ou 12 dans lequel les biellettes (351) viennent en butée l'une contre l'autre lorsque les éléments semeurs (34) sont dans leur position resserrée pour définir l'espace minimal entre les éléments semeurs (34) adjacents dans leur position resserrée.

14. Semoir (30) selon la revendication 11 ou 12 comprenant au moins une butée (38) contre laquelle viennent en appui les biellettes (351) l'une repliée par rapport à l'autre pour définir l'espace minimal entre les éléments semeurs (34) adjacents dans leur position resserrée.

15. Semoir (30) selon l'une quelconque des revendications 2 ou 3, dans lequel les moyens de modification de la longueur de déploiement du au moins un élément de liaison flexible (35) comprennent des moyens de modification du chemin du au moins un élément de liaison flexible (35) entre les éléments semeurs (34) adjacents auxquels il est relié.

16. Semoir (30) selon la revendication 15, dans lequel le au moins un élément de liaison flexible (35) comprend deux biellettes (40) chacune reliée à l'une de ses extrémités à un des éléments semeurs (34) adjacents par une liaison pivot (41) d'axe essentiellement perpendiculaire à la direction de déplacement desdits éléments semeurs (34), les moyens de modification du chemin dudit au moins un élément de liaison flexible (35) comprenant un guide (42) auquel lesdites biellettes (40) sont articulées, ledit guide (42) étant monté coulissant le long d'une tige (43) située dans un plan passant par la direction de déplacement desdits éléments semeurs( 34) et essentiellement perpendiculaire aux axes desdites liaisons pivots, une pluralité de points d'ancrage (44) étant espacés le long de ladite tige pour y solidariser au choix ledit guide (42) pour définir ladite longueur de déploiement.

17. Semoir (30) selon la revendication 16, comprenant deux biellettes de stabilisation (45) articulée chacune à l'une desdites biellettes (40) et à la tige (43).

18. Semoir (30) selon la revendication 15, dans lequel les moyens de modification du chemin du au moins un élément de liaison flexible (35) entre les éléments semeurs (34) adjacents auxquels il est relié comprennent au moins une poulie (50), ledit élément de liaison flexible (35) s'enroulant autour de ladite poulie (50) et se déroulant respectivement lors du passage desdits éléments semeurs (34) dans ladite position resserrée et dans ladite position écartée, lesdits moyens de modification comprenant des moyens de blocage (52, 55) de la rotation de ladite poulie (50) à différents niveaux de déroulement dudit élément de liaison flexible (35), chaque niveau de déroulement définissant une distance entre deux éléments semeurs (34) adjacents.

19. Semoir (30) selon la revendication 15, dans lequel les moyens de modification du chemin du au moins un élément de liaison flexible (35), entre les éléments semeurs (34) adjacents auxquels il est relié, comprennent une pluralité de points d'ancrage (60, 61) solidaires d'au moins un des éléments semeurs (34) adjacents , lesdits points d'ancrage (60, 61) étant espacés les uns des autres essentiellement perpendiculairement à la direction de déplacement desdits éléments semeurs (34), au moins une extrémité dudit élément de liaison flexible (35) pouvant être solidarisées à différents de ces points d'ancrage (60, 61) pour ajuster la longueur de déploiement dudit élément de liaison flexible (35), celui-ci étant guidé par au moins un renvoi d'angle (62) s'étendant à une extrémité de ladite pluralité de points d'ancrage (60, 61) décalée de ladite direction de déplacement desdits éléments semeurs (34).

20. Semoir (30) selon la revendication 15, dans lequel les moyens de modification du chemin, du au moins un élément de liaison flexible (35) entre les éléments semeurs (34) adjacents auxquels il est relié, comprennent une pluralité de points d'ancrage (70, 71) solidaires d'au moins un des éléments semeurs (34) adjacents lesdits points d'ancrage (70, 71) étant espacés les uns des autres essentiellement perpendiculairement à la direction de déplacement desdits éléments semeurs (34), ledit élément de liaison flexible (35) formant une boucle pouvant entourer au moins un des points d'ancrage (70, 71) pour ajuster la longueur de déploiement dudit élément de liaison flexible (35).

21. Semoir (30) selon l'une quelconque des revendications 2 ou 3, dans lequel lesdits moyens de réglage de la distance entre les éléments semeurs (34) adjacents comprennent une pluralité de points d'ancrage (80, 81) solidaires d'au moins un des éléments semeurs (34) adjacents, lesdits points d'ancrage (80, 81) étant espacés les uns des autres essentiellement parallèlement à la direction de déplacement desdits éléments semeurs (34), au moins une des extrémités dudit élément de liaison flexible (35) pouvant être solidarisées au choix à différents de ces points d'ancrage (80, 81) pour ajuster la distance entre les éléments semeurs en position écartée.

22. Semoir (30) selon la revendication 21, dans lequel au moins une extrémité libre de l'élément de liaison flexible (35) porte une platine d'ancrage (82) essentiellement en forme de V avec deux extrémités (820) destinées à coopérer avec les points d'ancrage (80, 81) et un fond (821) relié à une extrémité dudit élément de liaison flexible (35), les platines (82) étant réversibles de telle sorte que ses extrémités (820) puisse être orientées vers ledit élément de liaison flexible (35) ou vers l'extérieur de celui-ci pour modifier ladite distance entre les éléments semeurs (34) adjacents en position écartée lorsque lesdites platines (82) coopère avec des points d'ancrage (80, 81) donnés.

## Patentansprüche

1. Sämaschine (30) mit einem Tragrahmen (31) und benachbarten Säelementen (34), die mit dem Tragrahmen (31) fest verbunden und relativ zueinander zwischen einer schmalen Position, in der die Säelemente (34) einander angenähert sind, und einer weiten Position, in der sie voneinander entfernt sind, beweglich montiert sind, wobei die Sämaschine (30) mehrere Einstellmittel umfasst, wobei jedes Einstellmittel eine variable Einstellung des Abstands zwischen zwei gegebenen benachbarten Säelementen (34) unabhängig von den anderen Einstellmitteln und unabhängig vom Abstand zwischen zwei anderen gegebenen Säelementen (34) am Tragrahmen (31) ermöglicht, wobei jedes Einstellmittel im Wesentlichen zwischen zwei gegebenen benachbarten Säelementen (34) in jedem ihrer Zustände und beim Übergang von dem einen in den anderen ihrer Zustände angeordnet ist und wobei jedes Einstellmittel mindestens ein flexibles Verbindungselement (35) umfasst, wobei jedes flexible Verbindungselement (35) zwei benachbarte Säelemente (34) verbindet und einen gefalteten Zustand einnimmt, wenn sich die Säelemente (34) in der schmalen Position befinden, und einen entfalteten Zustand einnimmt, wenn sich die Säelemente (34) in der weiten Position befinden.

2. Sämaschine (30) nach Anspruch 1, wobei die Entfaltungslänge des mindestens einen flexiblen Verbindungselements (35) zwischen seinem gefalteten Zustand und seinem entfalteten Zustand in der weiten Position den Abstand zwischen den benachbarten Säelementen (34), mit denen es verbunden ist, definiert, wobei die Einstellmittel Mittel zum Ändern der Entfaltungslänge des mindestens einen flexiblen Verbindungselements (35) umfassen.

3. Sämaschine (30) nach einem der Ansprüche 1 oder 2, umfassend Mittel zum Antreiben der Säelemente (34) in ihrer weiten Position und in ihrer schmalen Position, wobei die Antriebsmittel auf das bzw. die am weitesten außerhalb des Tragrahmens (31) befindlichen Säelemente (34) wirken, wobei die Säelemente (34) durch die flexiblen Verbindungselemente (3) paarweise verbunden sind.

4. Sämaschine (30) nach einem der Ansprüche 2 oder 3, wobei das mindestens eine flexible Verbindungselement (35) einen Schwenkarm (351) und ein flexibles Verbindungsglied (352) umfasst, wobei der Schwenkarm (351) an einem seiner Enden über eine Schwenkverbindung (353) mit einer zur Bewegungsrichtung der Säelemente (34) im Wesentlichen senkrechten Achse mit einem der benachbarten Säelemente (34) verbunden ist und am anderen seiner Enden mittels des flexiblen Verbindungsglieds (352) mit dem benachbarten Säelement (34) verbunden ist, wobei die Mittel zum Ändern der Entfaltungslänge mehrere Ankerpunkte (3511) umfassen, die entlang des Schwenkarms (351) voneinander beabstandet sind, um das flexible Verbindungsglied (352) nach Wahl an verschiedenen Ankerpunkten (3511) damit zu verbinden, um die Entfaltungslänge zu definieren.

5. Sämaschine (30) nach einem der Ansprüche 2 oder 3, wobei das mindestens eine flexible Verbindungselement (35) zwei Schwenkarme (351) umfasst, die jeweils an einem ihrer Enden über eine Schwenkverbindung (353) mit einer zur Bewegungsrichtung der Säelemente (34) im Wesentlichen senkrechten Achse mit einem der benachbarten Säelemente (34) verbunden sind, wobei die Mittel zum Ändern der Entfaltungslänge mehrere Ankerpunkte (3511) umfassen, die entlang jedes der Schwenkarme (351) voneinander beabstandet sind, um die Schwenkarme (351) nach Wahl an verschiedenen Ankerpunkten (3511) miteinander zu verbinden, um die Entfaltungslänge zu definieren.

6. Sämaschine (30) nach Anspruch 5, wobei die Schwenkarme (351) mittels eines flexiblen Verbindungsglieds (352) miteinander verbunden sind.

7. Sämaschine (30) nach einem der Ansprüche 4 oder 6, wobei die Ankerpunkte (3511) mehrere Öffnungen umfassen, in die Stifte (36) eingeführt werden können, die mit den Enden des flexiblen Verbindungsglieds (352) fest verbunden sind.

8. Sämaschine (30) nach den Ansprüchen 3 und 4 oder nach Anspruch 3 und einem der Ansprüche 5 bis 7, wobei der bzw. die Punkte zur Verbindung des Schwenkarms (der Schwenkarme) (351) mit dem benachbarten Säelement (den benachbarten Säelementen) (34) und die Punkte zur Verankerung des Schwenkarms (351) mit dem flexiblen Verbindungsglied (352) oder der Schwenkarme (351) miteinander im Wesentlichen entlang der Bewegungsrichtung der Säelemente (34), wenn sie sich in ihrer weiten Position befinden, und entlang der Richtung der Antriebskräfte der Antriebsmittel ausgerichtet sind.

9. Sämaschine (30) nach Anspruch 4 oder nach einem der Ansprüche 6 bis 8, wobei das flexible Verbindungsglied (352) ein flexibles Element ist, das zu der Gruppe gehört, die Folgendes umfasst:
- Kabel;
- Riemen;
- Seil.

10. Sämaschine (30) nach Anspruch 4 oder nach einem der Ansprüche 6 bis 8, wobei das flexible Verbindungsglied (352) gelenkig miteinander verbundene Kettenglieder (3520) umfasst.

11. Sämaschine (30) nach einem der Ansprüche 5 bis 10, wobei die Schwenkarme (351) im Wesentlichen in Verlängerung zueinander entfaltet sind, wenn sich die Säelemente (34) in ihrer weiten Position befinden, und im Wesentlichen relativ zueinander gefaltet sind, wenn sich die Säelemente (34) in ihrer schmalen Position befinden.

12. Sämaschine (30) nach Anspruch 11, umfassend elastische Rückstellmittel (37), die das Bestreben haben, die Schwenkarme (351) beim Übergang der Säelemente (34) von ihrer weiten Position in ihre schmale Position relativ zueinander zu falten.

13. Sämaschine (30) nach Anspruch 11 oder 12, wobei die Schwenkarme (351) aneinander anstoßen, wenn sich die Säelemente (34) in ihrer schmalen Position befinden, um zwischen den benachbarten Säelementen (34) in ihrer schmalen Position den Mindestabstand zu definieren.

14. Sämaschine (30) nach Anspruch 11 oder 12, umfassend mindestens einen Anschlag (38), an dem die Schwenkarme (351) anliegen, wenn sie relativ zueinander gefaltet sind, um zwischen den benachbarten Säelementen (34) in ihrer schmalen Position den Mindestabstand zu definieren.

15. Sämaschine (30) nach einem der Ansprüche 2 oder 3, wobei die Mittel zum Ändern der Entfaltungslänge des mindestens einen flexiblen Verbindungselements (35) Mittel zum Ändern des Weges des mindestens einen flexiblen Verbindungselements (35) zwischen den benachbarten Säelementen (34), mit denen es verbunden ist, umfassen.

16. Sämaschine (30) nach Anspruch 15, wobei das mindestens eine flexible Verbindungselement (35) zwei Schwenkarme (40) umfasst, die jeweils an einem ihrer Enden über eine Schwenkverbindung (41) mit einer zur Bewegungsrichtung der Säelemente (34) im Wesentlichen senkrechten Achse mit einem der benachbarten Säelemente (34) verbunden sind, wobei die Mittel zum Ändern des Weges des mindestens einen flexiblen Verbindungselements (35) eine Führung (42) umfassen, an der die Schwenkarme (40) angelenkt sind, wobei die Führung (42) entlang einer Stange (43), die sich in einer durch die Bewegungsrichtung der Säelemente (34) verlaufende und zu den Stiften der Schwenkverbindungen im Wesentlichen senkrechten Ebene befindet, gleitend montiert ist, wobei entlang der Stange mehrere Ankerpunkte (44) beabstandet angeordnet sind, um die Führung (42) nach Wahl fest damit zu verbinden, um die Entfaltungslänge zu definieren.

17. Sämaschine (30) nach Anspruch 16, umfassend zwei Stabilisierungsstangen (45), die jeweils an einem der Schwenkarme (40) und an der Stange (43) angelenkt sind.

18. Sämaschine (30) nach Anspruch 15, wobei die Mittel zum Ändern des Weges des mindestens einen flexiblen Verbindungselements (35) zwischen den benachbarten Säelementen (34), mit denen es verbunden ist, mindestens eine Rolle (50) umfassen, wobei sich das flexible Verbindungselement (35) beim Übergang der Säelemente (34) in die schmale Position und in die weite Position auf die Rolle (50) aufwickelt bzw. sich von dieser abwickelt, wobei die Änderungsmittel Mittel (52, 55) zum Blockieren der Drehung der Rolle (50) auf verschiedenen Abwicklungsstufen des flexiblen Verbindungselements (35) umfassen, wobei jede Abwicklungsstufe einen Abstand zwischen zwei benachbarten Säelementen (34) definiert.

19. Sämaschine (30) nach Anspruch 15, wobei die Mittel zum Ändern des Weges des mindestens einen flexiblen Verbindungselements (35), zwischen den benachbarten Säelementen (34), mit denen es verbunden ist, mehrere Ankerpunkte (60, 61) umfassen, die mit mindestens einem der benachbarten Säelemente (34) fest verbunden sind, wobei die Ankerpunkte (60, 61) im Wesentlichen senkrecht zur Bewegungsrichtung der Säelemente (34) voneinander beabstandet sind, wobei mindestens ein Ende des flexiblen Verbindungselements (35) mit verschiedenen dieser Ankerpunkte (60, 61) fest verbunden werden kann, um die Entfaltungslänge des flexiblen Verbindungselements (35) einzustellen, wobei dieses durch mindestens eine Winkelumlenkung (62) geführt wird, die sich an einem zur Bewegungsrichtung der Säelemente (34) versetzten Ende der mehreren Ankerpunkte (60, 61) erstreckt.

20. Sämaschine (30) nach Anspruch 15, wobei die Mittel zum Ändern des Weges des mindestens einen flexiblen Verbindungselements (35) zwischen den benachbarten Säelementen (34), mit denen es verbunden ist, mehrere Ankerpunkte (70, 71) umfassen, die mit mindestens einem der benachbarten Säelemente (34) fest verbunden sind, wobei die Ankerpunkte (70, 71) im Wesentlichen senkrecht zur Bewegungsrichtung der Säelemente (34) voneinander beabstandet sind, wobei das flexible Verbindungselement (35) eine Schleife bildet, die mindestens einen der Ankerpunkte (70, 71) umgeben kann, um die Entfaltungslänge des flexiblen Verbindungselements (35) einzustellen.

21. Sämaschine (30) nach einem der Ansprüche 2 oder 3, wobei die Mittel zum Einstellen des Abstands zwischen den benachbarten Säelementen (34) mehrere Ankerpunkte (80, 81) umfassen, die mit mindestens einem der benachbarten Säelemente (34) fest verbunden sind, wobei die Ankerpunkte (80, 81) im Wesentlichen parallel zur Bewegungsrichtung der Säelemente (34) voneinander beabstandet sind, wobei mindestens eines der Enden des flexiblen Verbindungselements (35) nach Wahl mit verschiedenen dieser Ankerpunkte (80, 81) fest verbunden werden kann, um den Abstand zwischen den Säelementen in der weiten Position einzustellen.

22. Sämaschine (30) nach Anspruch 21, wobei mindestens ein freies Ende des flexiblen Verbindungselements (35) eine im Wesentlichen V-förmige Verankerungsplatte (82) mit zwei Enden (820), die dazu bestimmt sind, mit den Ankerpunkten (80, 81) zusammenzuwirken, und einem Boden (821), der mit einem Ende des flexiblen Verbindungselements (35) verbunden ist, trägt, wobei die Platten (82) umkehrbar sind, so dass ihr Enden (820) zum flexiblen Verbindungselement (35) hin oder von diesem weg ausgerichtet sein können, um den Abstand zwischen den benachbarten Säelementen (34) in der weiten Position zu verändern, wenn die Platten (82) mit gegebenen Ankerpunkten (80, 81) zusammenwirken.

## Claims

1. Seeder (30) comprising a frame (31) and adjacent sowing elements (34) which are secured to said frame (31) and mounted movable in translation with respect to one another between a closely-spaced position in which said sowing elements (34) are close together and a separated position in which they are spaced apart, said seeder (30) comprising a plurality of adjusting means, each adjusting means allowing variable adjustment of the distance between two given adjacent sowing elements (34), independently of the other adjusting means, and independently of the distance between two other given adjacent sowing elements (34) on said frame (31), each adjusting means being essentially located between two given adjacent sowing elements (34), in each of their states and when transitioning from one of their states to the other, and each adjusting means comprising at least one flexible connecting element (35), each flexible connecting element (35) connecting two adjacent sowing elements (34) and adopting a folded state when said unit drill elements (34) are in said closely-spaced position, and a deployed state when said sowing elements (34) are in said separated position.

2. Seeder (30) according to Claim 1, wherein the length of deployment of the at least one flexible connecting element (35) between its folded state and its deployed state defines the distance, in said separated position, between the adjacent sowing elements (34) to which it is connected, the adjusting means comprising means for modifying the length of deployment of said at least one flexible connecting element (35).

3. Seeder (30) according to one of Claims 1 and 2, comprising driving means for driving the sowing elements (34) into their separated position and into their closely-spaced position, said driving means acting on sowing element or elements (34) located furthest towards the outside of said frame (31), said sowing elements (34) being connected pairwise by the flexible connecting elements (3).

4. Seeder (30) according to either one of Claims 2 and 3, wherein said at least one flexible connecting element (35) comprises a connecting rod (351) and a flexible link (352), said connecting rod (351) being connected at one of its ends to one of the adjacent sowing elements (34) by a pivot connection (353) of axis essentially perpendicular to the direction of travel of said sowing elements (34), and connected at the other of its ends to the adjacent sowing elements (34) by means of said flexible link (352), said means for modifying the length of deployment comprising a plurality of anchor points (3511) spaced away from one another along said connecting rod (351) so that said flexible link (352) can be connected thereto at different anchor points (3511) as desired in order to define said length of deployment.

5. Seeder (30) according to either one of Claims 2 or 3, wherein the at least one flexible connecting element (35) comprises two connecting rods (351), each one connected at one of its ends to one of the adjacent sowing elements (34) by a pivot connection (353) of axis essentially perpendicular to the direction of travel of said sowing elements (34), said means for modifying the length of deployment comprising a plurality of anchor points (3511) spaced away from one another along each of said connecting rods (351) so that said connecting rods (351) can be connected to one another at different anchor points (3511) as desired in order to define said length of deployment.

6. Seeder (30) according to Claim 5, wherein the connecting rods (351) are connected to one another by means of a flexible link (352).

7. Seeder (30) according to either one of Claims 4 and 6, wherein the anchor points (3511) comprise a plurality of orifices into which pins (36) secured to the ends of the flexible link (352) can be inserted.

8. Seeder (30) according to Claims 3 and 4, or to Claim 3 and any one of Claims 5 to 7, wherein the connecting point or points connecting the connecting rod or rods (351) to the adjacent sowing element or elements (34), and the anchor points anchoring the connecting rod (351) to the flexible link (352) or anchoring the connecting rods (351) to one another are essentially aligned in the direction of travel of the sowing elements (34) when they are positioned in their separated position and in the direction of the driving forces applied by the driving means.

9. Seeder (30) according to Claim 4, or to any one of Claims 6 to 8, wherein the flexible link (352) is a flexible element belonging to the group comprising:
- cables;
- belts;
- cords.

10. Seeder (30) according to Claim 4 or to any one of Claims 6 to 8, wherein the flexible link (352) comprises individual links (3520) articulated to one another.

11. Seeder (30) according to any one of Claims 5 to 10, wherein the connecting rods (351) are essentially deployed one in the continuation of the other when the sowing elements (34) are in their separated position, and are substantially folded relative to one another when said sowing elements (34) are in their closely-spaced position.

12. Seeder (30) according to Claim 11, comprising elastic return means (37) tending to return the connecting rods (351) to one being folded relative to the other as the sowing elements (34) transition from their separated position to their closely-spaced position.

13. Seeder (30) according to Claim 11 or 12, wherein the connecting rods (351) come into abutment against one another when the sowing elements (34) are in their closely-spaced position so as to define the minimal space between the adjacent sowing elements (34) in their closely-spaced position.

14. Seeder (30) according to Claim 11 or 12 comprising at least one end stop (38) against which the connecting rods (351) come to rest, one being folded relative to the other, so as to define the minimal space between the adjacent sowing elements (34) in their closely-spaced position.

15. Seeder (30) according to either one of Claims 2 and 3, wherein the means for modifying the length of deployment of the at least one flexible connecting element (35) comprise means for modifying the path of the at least one flexible connecting element (35) between the adjacent sowing elements (34) to which it is connected.

16. Seeder (30) according to Claim 15, wherein the at least one flexible connecting element (35) comprises two connecting rods (40), each one connected at one of its ends to one of the adjacent sowing elements (34) by a pivot connection (41) of axis essentially perpendicular to the direction of travel of said sowing elements (34), the means for modifying the path of said at least one flexible connecting element (35) comprising a guide (42) to which said connecting rods (40) are articulated, said guide (42) being mounted with the ability to slide along a rod (43) situated in a plane passing through the direction of travel of said sowing elements (34) and essentially perpendicular to the axes of said pivot connections, a plurality of anchor points (44) being spaced apart along said rod in order to secure said guide (42) thereto as desired in order to define said length of deployment.

17. Seeder (30) according to Claim 16, comprising two stabilizing connecting rods (45) each articulated to one of said connecting rods (40) and to the rod (43).

18. Seeder (30) according to Claim 15, wherein the means for modifying the path of the at least one flexible connecting element (35), between the adjacent sowing elements (34) to which it is connected, comprise at least a pulley (50), the flexible connecting element (35) being wrapped around said pulley (50) and respectively being unwrapped during the transition of said unit drill elements (34) into said closely-spaced position and into said separated position, said modifying means comprising blocking means (52, 55) that block the rotation of said pulley (50) at various levels of unwrapping of said flexible connecting element (35), each level of unwrapping defining a distance between two adjacent unit drill elements (34).

19. Seeder (30) according to Claim 15, wherein the means for modifying the path of the at least one flexible connecting element (35), between the adjacent sowing elements (34) to which it is connected, comprise a plurality of anchor points (60, 61) secured to at least one of the adjacent unit drill elements (34), said anchor points (60, 61) being spaced away from one another essentially perpendicular to the direction of travel of said sowing elements (34), at least one end of said flexible connecting element (35) being able to be secured to various ones of these anchor points (60, 61) in order to adjust the length of deployment of said flexible connecting element (35), this element being guided by at least an angle transmission (62) extending at one end of said plurality of anchor points (60, 61) offset from said direction of travel of said sowing elements (34).

20. Seeder (30) according to Claim 15, wherein the means for modifying the path of the at least one flexible connecting element (35), between the adjacent sowing elements (34) to which it is connected, comprise a plurality of anchor points (70, 71) secured to at least one of the adjacent sowing elements (34), said anchor points (70, 71) being spaced away from one another essentially perpendicular to the direction of travel of said sowing elements (34), said flexible connecting element (35) forming a loop able to pass around at least one of the anchor points (70, 71) in order to adjust the length of deployment of said flexible connecting element (35).

21. Seeder (30) according to either one of Claims 2 and 3, wherein said means for adjusting the distance between the adjacent sowing elements (34) comprise a plurality of anchor points (80, 81) secured to at least one of the adjacent sowing elements (34), said anchor points (80, 81) being spaced away from one another essentially parallel to the direction of travel of said sowing elements (34), at least one of the ends of said flexible connecting element (35) being able to be secured to various ones of these anchor points (80, 81) as desired in order to adjust the distance between the sowing elements in the separated position.

22. Seeder (30) according to Claim 21, wherein at least one free end of the flexible connecting element (35) bears an anchor plate (82) essentially in the shape of a V with two ends (820) intended to collaborate with the anchor points (80, 81) and a bottom (821) connected to one end of said flexible connecting element (35), the plates (82) being reversible so that their ends (820) can be oriented towards said flexible connecting element (35) or towards the outside thereof in order to modify said distance between the adjacent sowing elements (34) in the separated position when said plates (82) are collaborating with given anchor points (80, 81).
